# FASCICULE DE BREVET EUROPEEN

(11) **EP 0 682 753 B1**
(45) Date de publication et mention de la délivrance du brevet: **08.07.1998**
(21) Numéro de dépôt: 95900803.8
(22) Date de dépôt: 07.11.1994
(51) Int. Cl.: F16D 13/71, F16D 13/50

(54) **PROCEDE DE MONTAGE D'UN MECANISME D'EMBRAYAGE A DIAPHRAGME ET A CROCHETS DE RAPPEL**
VERFAHREN ZUM ZUSAMMENBAU EINER TELLERFEDERKUPPLUNG MIT MITNEHMERFEDER
METHOD OF ASSEMBLING A CLUTCH MECHANISM COMPRISING A DIAPHRAGM AND RETURN HOOKS

(30) Priorité: 08.11.1993 FR 9313268
(43) Date de publication de la demande: 22.11.1995
(73) Titulaire: VALEO, 75017 Paris (FR)
(72) Inventeur: REGULSKI, Bernard, F-80600 Beauquesne (FR); ANNIC, Pascal, F-44800 Saint-Herblain (FR)
(74) Mandataire: Gamonal, Didier
(86) Numéro de dépôt international: FR9401292
(87) Numéro de publication internationale: WO9513484

(56) Documents cités:
- DE-A- 2 239 477
- FR-A- 2 031 964
- US-A- 2 770 341
- US-A- 3 630 333

## Description

La présente invention concerne les mécanismes d'embrayage à diaphragme et à crochets de rappel et se rapporte plus particulièrement à un procédé de montage d'un tel mécanisme.

Ainsi qu'on le sait, comme décrit par exemple dans le document FR-A-2 031 964, un tel mécanisme d'embrayage comporte un couvercle propre à être rapporté sur le plateau de réaction de l'embrayage, un diaphragme monté sur le couvercle par l'intermédiaire de moyens de pivotement assujettissant de manière pivotante le diaphragme au couvercle, un plateau de pression lié en rotation au couvercle tout en étant monté mobile axialement par rapport à celui-ci par l'intermédiaire de languettes tangentielles, des crochets de rappel pour atteler le diaphragme au plateau de pression par pincement de la périphérie externe du diaphragme entre lesdits crochets et un bossage d'appui, que présente le plateau de pression pour appui du diaphragme, des organes de fixation servant à la fixation des languettes tangentielles et des crochets de rappel à des pattes, que présente le plateau de pression radialement en saillie à sa périphérie externe.

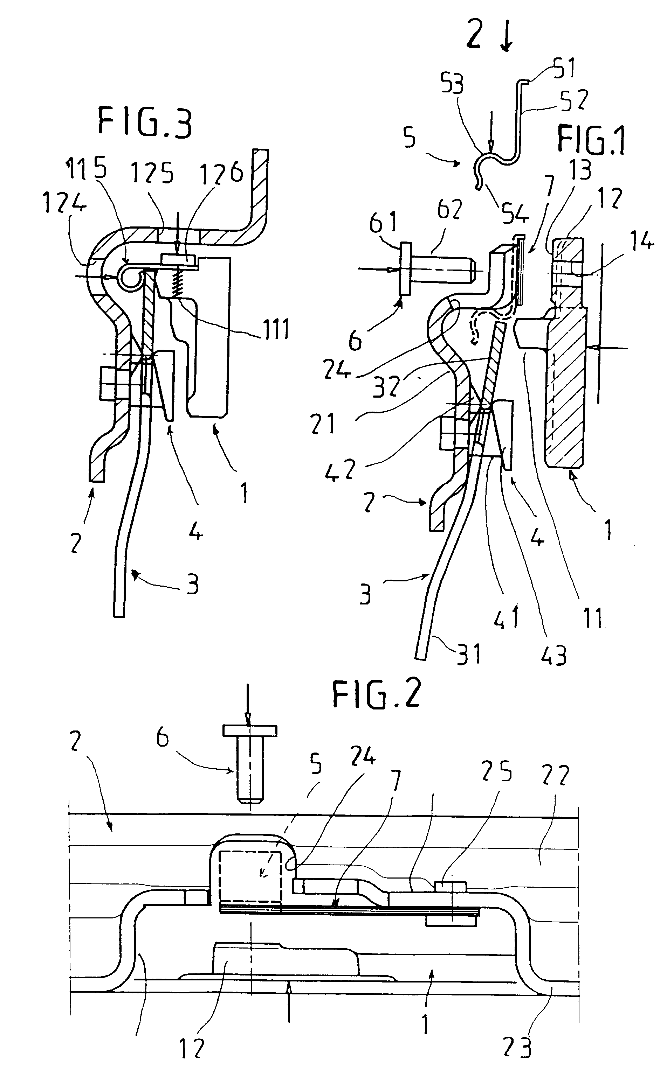

Usuellement (figures 1 et 2) le montage s'effectue par fixation des languettes 7, élastiquement déformables de manière comme en soi, au rebord radial 23 du couvercle par l'intermédiaire d'organes de fixation 25 tels que des rivets, puis par montage latéral (ou transversal) du crochet 5 sur les languettes 7 et enfin par enfilage des organes de fixation 6 dans des trous que présentent à cet effet les languettes 7, les crochets 5 et les oreilles 12 du plateau de pression 1.

Il en résulte que le couvercle 2 présente des trous 24 pour monter latéralement (ou transversalement) les crochets 5 et axialement les organes de fixation pénétrant dans les trous 14 des oreilles 12.

Les trous 24 affaiblissent le couvercle car ils affectent la jupe 22 du couvercle, ladite jupe raccordant le fond du couvercle 21 à son rebord radial de fixation 23.

Pour pallier cet inconvénient, on peut songer à une solution du type de la figure 3, dans laquelle deux trous 124 et 125 sont prévus pour respectivement enfilage du crochet 115 et de vis de fixation 126 montées sur le bossage 111 doté d'une surépaisseur à cet effet.

Dans cette solution, les organes de fixation servent uniquement au montage des languettes tangentielles 7 sur les oreilles 12, en sorte que le nombre d'organes de fixation est doublé et que l'on modifie le plateau de pression.

Par contre le montage des crochets est facilité et peu se faire axialement en automatique.

La présente invention a pour objet de créer un nouveau procédé de montage permettant un montage axial des crochets, sans modifier le plateau de pression, tout en rigidifiant le couvercle.

Suivant l'invention un procédé de montage d'un mécanisme d'embrayage du type sus-indiqué est caractérisé en ce que l'on forme des sous-ensembles crochets de rappel - languettes tangentielles - organes de fixation, puis en ce que l'on fixe les languettes tangentielles de ces sous-ensembles au couvercle, en ce que l'on monte ensuite le diaphragme sur le couvercle à l'aide des moyens de pivotement et enfin en ce que l'on fixe les organes de fixation sur les pattes du plateau de pression.

Grâce à l'invention, le plateau de pression demeure inchangé et toutes les opérations de montage peuvent se faire axialement et rendre plus simple un montage automatique. En outre le couvercle est rigidifié puisqu'il n'y a plus à pratiquer dans celui-ci des trous pour le montage des crochets, le couvercle présentant si besoin est des trous adaptés au passage de la tête des organes de fixation.

Les sous-ensembles crochets de rappel, languettes tangentielles, organes de fixation peuvent être formés en coinçant la ou les languettes tangentielles entre la tête des organes de fixation et les crochets de rappel engagés à léger serrage sur les fûts des organes de fixation.

Bien entendu ces sous-ensembles peuvent être réalisés à l'aide de plaques montées à léger serrage sur les fûts des organes de fixation ou en variante par au moins la dernière languette engagée à léger serrage sur le fût des organes de fixation. En variante on peut conformer les organes de fixation pour réaliser un tel sous-ensemble.

Bien entendu on peut former le sous-ensemble par collage, ou temporairement par aimantation.

On appréciera dans tous les cas, que l'outillage pour la fabrication du couvercle est globalement conservé, et qu'il suffit pour cela de modifier l'outil permettant la création de passages pour les têtes des organes de fixation qui demeurent commun aux languettes et aux crochets de rappel.

Dans certains cas, lorsqu'un espace suffisant existe entre le couvercle et le plateau de pression, on peut même supprimer les passages précités.

La description qui va suivre illustre l'invention, en regard des dessins annexés dans lesquels :
- la figure 1 est une vue en coupe axiale d'un mécanisme d'embrayage de l'art antérieur, lors de sa première phase de montage ;
- la figure 2 est une vue selon la flèche 2 de la figure 1 ;
- la figure 3 est une vue en coupe axiale montrant un crochet de l'art antérieur monté selon un autre mode de réalisation ;
- la figure 4 est une vue d'un sous-ensemble selon l'invention selon la flèche 4 de la figure 5 ;
- la figure 5 est une vue d'un sous-ensemble selon l'invention ;
- la figure 6 est une vue analogue à la figure 2 montrant la seconde phase de montage du procédé selon l'invention ;
- la figure 7 est une vue en coupe selon la ligne 7-7 de la figure 6 ;
- la figure 8 est une vue analogue à la figure 7 pour la dernière phase de montage du mécanisme selon l'invention ;
- les figures 9 à 11 sont des vues analogues à la figure 5 pour d'autres modes de réalisation.

Dans les figures sont illustrés des procédés de montage d'un mécanisme d'embrayage du type poussé pour véhicule automobile.

Ainsi qu'on le sait, un tel mécanisme d'embrayage forme un ensemble unitaire et comporte un couvercle 2 propre à être rapporté sur le plateau de réaction de l'embrayage (non visible), un diaphragme 3 monté sur le couvercle par l'intermédiaire de moyens de pivotement 4 assujettisant de manière pivotante le diaphragme 3 au couvercle 2, un plateau de pression 1, lié en rotation au couvercle 2, tout en étant monté mobile axialement par rapport à celui-ci par l'intermédiaire de languettes tangentielles 7, des crochets de rappel 5 pour atteler le diaphragme 3 au plateau de pression 1 par pincement de la périphérie externe du diaphragme 3 entre lesdits crochets 5 et un bossage d'appui 11, que présente le plateau de pression 1 pour appui du diaphragme 3, des organes de fixation 6 servant à la fixation des languettes tangentielles et des crochets de rappel 5 à des pattes 12, que présente le plateau de pression 1 radialement en saillie à sa périphérie externe.

Usuellement le couvercle 2 est en forme d'assiette creuse et comporte un fond 21, globalement d'orientation transversale, un rebord radial de fixation 23, présentant de place en place des trous (non visibles) pour passage d'organes de fixation, tels que des vis permettant la fixation du couvercle 2 au plateau de réaction de l'embrayage non visible.

Une jupe annulaire 22, globalement d'orientation axiale, relie le fond 21 à la jupe 23.

Cette jupe est échancrée localement pour formation de auvents 28 permettant le montage des languettes tangentielles 7 élastiquement déformables.

L'auvent 28 est délimité par des plages 29 appartenant au rebord radial 23. Ces plages 29 sont décalées axialement par rapport au plan de fixation sur le plateau de réaction et servent à la fixation des languettes 7.

Par ailleurs, la jupe 22 présente également des trous 24 (figures 1 et 2) pour le montage des organes de fixation 6. Ce couvercle 2 est métallique en étant ici en tôle emboutie.

Le plateau de pression, usuellement en fonte, comporte un bossage d'appui 11, usuellement fractionné en secteurs annulaires, pour appui du diaphragme 3. Il comporte également de place en place les pattes radiales de fixation précitées 12. Ces pattes 12 sont implantées à la faveur des auvents 28.

La fixation des languettes 7, ici métalliques, s'effecte à l'une de leur extrémité usuellement à l'aide de rivets 25 fixés aux plages 29.

A leur autre extrémité ces languettes 7 sont fixées par les organes de fixation 6 aux pattes 12 du plateau 1. Les languettes 7 sont donc trouées pour passage des organes 25,6.

Le diaphragme 3 métallique, de forme tronconique à l'état libre, comporte une partie périphérique 32 formant rondelle Belleville prolongée vers le centre par des doigts radiaux 31 séparés les uns des autres par des fentes, qui s'épanouissent au niveau de la périphérie interne de la rondelle Belleville 32 pour permettre le passage d'organes 41 appartenant aux moyens de pivotement 4 précités.

Dans ces figures, les organes 41 consistent en des colonnettes, dont la tête 43 est conformée pour offrir un appui secondaire arrondi au diaphragme comme dans le document FR-A-2 031 964. Cet appui secondaire est disposé en regard d'un appui primaire 42 porté par le couvercle 2.

Ici l'appui 42 est formé par emboutissage local du fond 21 du couvercle.

Ainsi le diaphragme 3 est, par la périphérie interne de sa rondelle Belleville 32, monté de manière pivotante entre les appuis 42,43.

Il porte par la partie périphérique de sa rondelle Belleville 32 sur le bossage fractionné 11.

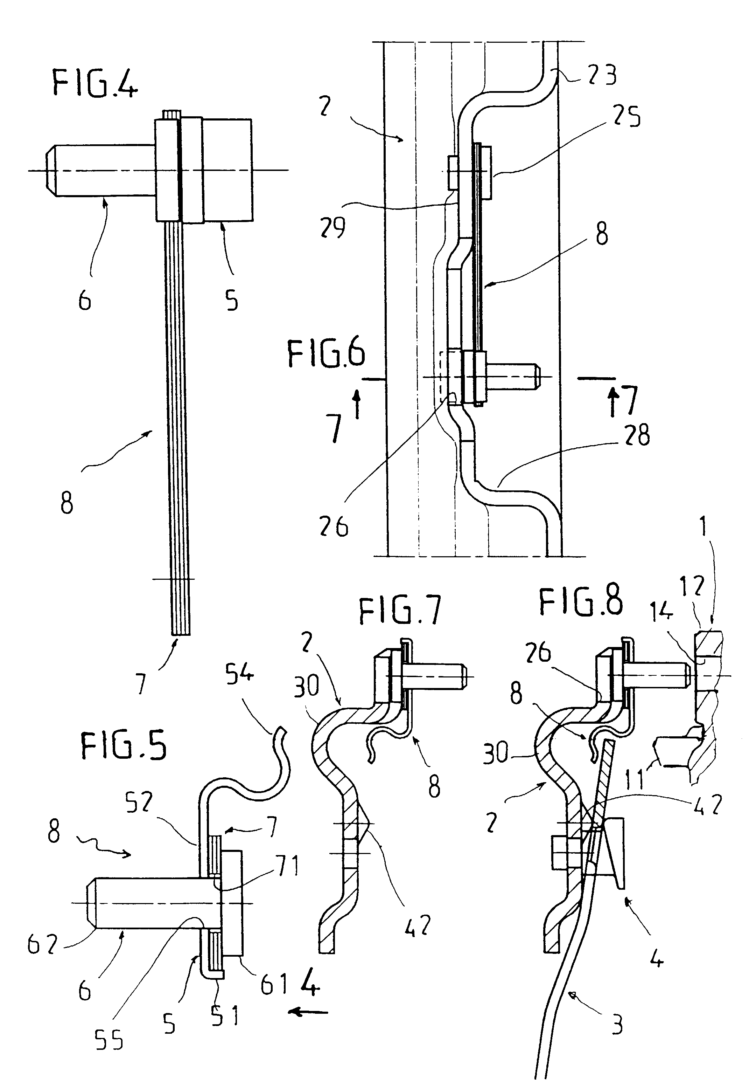

Ce diaphragme est également soumis à l'action des crochets de rappel 5 pour pincement de celui-ci entre le bossage 11 précité et ledit crochet 5. Ce crochet 5, ici métallique, est élastiquement déformable tout comme les languettes 7. Il comporte usuellement une semelle 52 pour appui sur la face 13 des pattes 12, tournée vers le rebord 23 du couvercle 2, soit directement figures 4 à 8 ou indirectement via les languettes 7 (figures 1 et 2).

A sa périphérie externe cette semelle est prolongée par un rebord d'orientation axiale 51 venant en prise avec la tranche de languettes tangentielles 7 superposées pour formation d'un jeu de languettes tangentielles, lesdits jeux de languettes s'étendant chacun d'une patte 12 à une plage 29.

Ainsi le rebord 51 empêche une rotation du crochet 5 et constitue un moyen d'indexation pour le montage des crochets 5.

Les organes de fixation 6 consistent usuellement en des rivets avec une tête 61 pour contact avec la semelle 52 dans les figures 1 et 9 à 11 ou avec les languettes 7 à la figure 5.

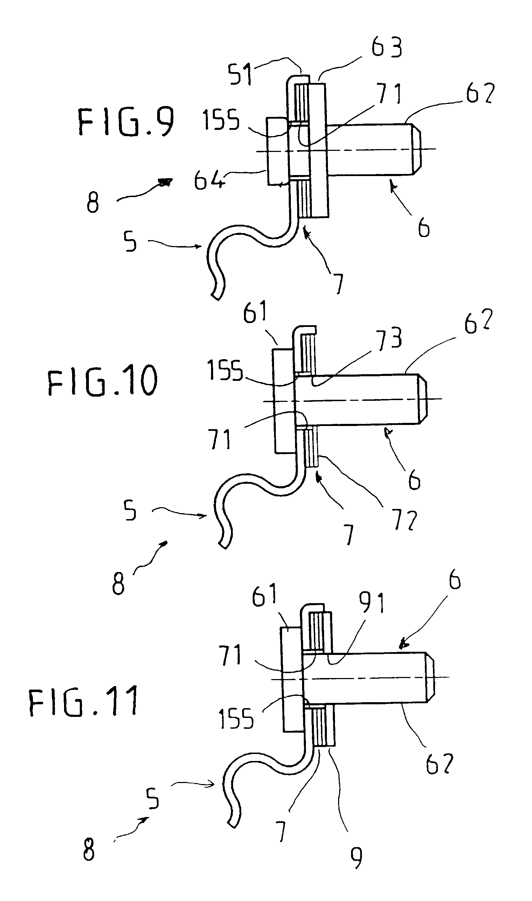

Ces rivets présentent un fût 62 destiné à traverser des ouvertures 55,71 (figures 1,5) 155,171 (figure 9), 155,71,73 (figure 10) et 155,71 (figure 11) pratiquées respectivement dans les crochets 5 et dans les languettes 7.

A la figure 11 les organes 6 traversent également une plaque 9 de manière décrite ci-après.

Ici les languettes tangentielles sont réparties régulièrement sur une même circonférence circonférentiellement à 120° les unes par rapport aux autres (tangentiellement à celle-ci), en sorte que le couvercle présente trois auvents 28 et trois jeux de languettes tangentielles 7. Chaque jeu comporte plusieurs languettes superposées les unes aux autres.

Bien entendu tout cela dépend des applications, chaque jeu pouvant se réduire à une seule languette 7. Ces languettes 7 n'ont pas besoin d'être très cambrées puisque le rappel deu plateau 1 est effectué à l'aide du crochet 5 de manière décrite ci-après.

Dans tous les cas, lorsque l'embrayage est engagé, le diaphragme prend appui sur l'appui primaire 42 et sur le bossage 11 pour solliciter le plateau de pression 1 en direction opposée au fond du couvercle 2 afin de serrer les garnitures de frottement d'un disque de friction non visible, entre ledit plateau de pression 1 et ledit plateau de réaction.

Pour désengager l'embrayage, il faut agir en poussant à l'aide d'une butée de débrayage (non visible) sur l'extrémité des doigts 31 du diaphragme afin de faire pivoter le diaphragme, celui-ci prenant alors appui sur l'appui secondaire 43.

Au cours de cette manoeuvre de pivotement, le diaphragme, par la périphérie externe de sa rondelle Belleville 32, prend appui sur les crochets 5.

Plus particulièrement ici le diaphragme prend appui sur un bourrelet 54, que présente le crochet 5, ledit bourrelet constituant l'extrémité libre d'une partie sinueuse 53, que présente le crochet 5, ladite partie 53 se raccordant à la périphérie interne de la semelle 52 du crochet 5 (figures 1 et 5).

Par appui sur le bourrelet 54, le diaphragme 3 entraîne les crochets 5 et le plateau 1 lors de son mouvement de pivotement et ce en direction du fond 21 du couvercle.

Grâce aux crochets 5, on est sûr que le plateau de pression 1 est rappelé en direction du fond du couvercle 21 pour libération des garnitures de frottement du disque de friction précité et désengagement de l'embrayage.

Dans les figures 1,2 les ouvertures 24 ont une grande taille pour passage des crochets 5 et affaiblissent le couvercle 2.

Ceci étant rappelé, selon l'invention, le procédé de montage d'un mécanisme d'embrayage du type sus-indiqué est caractérisé en ce que l'on forme des sous-ensembles 8 - crochets de rappel 5 - languettes tangentielles 7 - organes de fixation 6, puis en ce que l'on fixe les languettes tangentielles 7 de ces sous-ensembles au couvercle 2, en ce que l'on monte ensuite le diaphragme 3 sur le couvercle 2 à l'aide des moyens de pivotement 4 et enfin en ce que l'on fixe les organes de fixation 6 sur les pattes 12 du plateau de pression 3.

Ce montage est illustré en particulier dans les figures 4 à 8. Ainsi dans les figures 4 à 5, le sous-ensemble est formé grâce aux crochets de rappel 5. Pour ce faire les languettes tangentielles 7 sont emprisonnées et pincées axialement entre la tête 61 des organes de fixation 6 et la semelle 52 des crochets 5, propre à venir en appui sur la face 13 des pattes 12 tournée vers le rebord 23.

Dans ce cas, le rebord 51 est tourné en direction opposée aux pattes 12 et n'a pas à respecter une côte précise.

Les organes 6 traversent par leur fût 62 à jeu des ouvertures 71 pratiquées dans les languettes 7 et sans jeu des ouvertures 55 pratiquées dans la semelle 52.

Ainsi on forme le sous-ensemble 8 par engagement à serrage des fûts 62 dans les ouvertures 55.

Ce sous-ensemble 8 étant formé, on fixe celui-ci sur les plages 29 du couvercle (figure 6), ledit couvercle présentant des ouvertures 26 formées dans son rebord 23 au niveau de ses auvents 28 et dans les plages 29 pour passage de la tête 61 des organes 6.

Ensuite on monte le diaphragme 3 sur le couvercle à l'aide des colonnettes 41 et enfin on engage les fûts 62 des organes 6 dans les passages 14 des pattes 12 du plateau 11 et l'on procède en final à un rivetage.

Toutes ces opérations peuvent se faire axialement en montage automatique.

Ainsi qu'il ressort à l'évidence des dessins et de la description, contrairement au mode de réalisation de la figure 3, ce sont les mêmes organes de fixation 6 qui assurent la fixation des crochets 5 et des languettes 7 aux pattes 12.

En outre, on voit que l'ouverture 26 des figures 6 et 8 est nettement moins importante que l'ouverture 24 de la figure 1 grâce au procédé de montage selon l'invention, en sorte que le couvercle 2 est rigidifié.

Cette rigidification permet de limiter la flexion du couvercle 2 sous l'action du diaphragme 3. Ainsi lors du désengagement de l'embrayage la levée du plateau de pression est améliorée.

Bien entendu la présence des ouvertures 26 n'est pas nécessaire.

En effet les ouvertures 26 évitent toute interférence entre les têtes 61 et le rebord 23 du couvercle comme montré à la figure 6. Elles ne servent pas au montage des organes 6 comme à la figure 1 puisque l'on forme le sous-ensemble 8 que l'on vient ensuite fixer à la plage 29 concernée.

Lorsque les jeux de fonctionnement le permette on peut supprimer ces ouvertures 26, notamment lorsque par construction on sait que les têtes 61 ne viendront pas toucher le couvercle 2.

De plus on notera que les crochets 5 passent radialement en-dessous de la jupe 22 du couvercle et que l'arrondi 30 raccordant le fond 21 à la jupe 22 permet de ne pas avoir d'interférence entre les crochets 5 et le couvercle 2.

Bien entendu en final on écrase l'extrémité du fût 62 pour procéder au rivetage.

A la figure 9 le sous-ensemble selon l'invention est réalisé grâce aux organes de fixation 6. Ceux-ci présentent pour ce faire, une collerette 63 séparant le fût 62 de la tête proprement dite de l'organe 6.

La collerette 63 est propre à venir en appui sur la face 13.

Cette tête cylindrique traverse à jeu les ouvertures 71 pratiquées dans les languettes tangentielles 7 et à jeu des ouvertures 155 pratiquées dans la semelle 52 du crochet de rappel 5 en correspondance avec les ouvertures 71.

Après traversée des ouvertures 71 et 155, l'extrémité de la tête est écrasée 64, en sorte que les languettes 7 et les crochets 5 sont emprisonnés et pincés axialement entre ladite tête sertie 64 et ladite collerette 63, la semelle 52 étant en appui sur les languettes 7.

Il est formé ainsi un sous-ensemble.

En variante le fût 62 des rivets 6 peut traverser à jeu l'ouverture 155 du crochet 5, à jeu des ouvertures 71 de certaines languettes et sans jeu des ouvertures 73 pratiquées dans au moins la dernière languette tangentielle 72, dite languette d'extrémité.

Dans ce cas, le crochet 5 et les languettes 7 concernées sont pincées et emprisonnées axialement entre la tête 61 du rivet 6 et la languette 72 propre à venir en appui contre la face 13.

En variante (figure 11) ce pincement peut être réalisé à l'aide d'une plaque 9 d'extrémité traversée sans jeu par le fût 62 des organes 6.

Ledit fût 62 traverse à jeu les ouvertures 71 des languettes 7 et l'ouverture 155 du crochet 5.

La semelle 52 et les languettes 7 sont emprisonnées ainsi axialement entre la tête 61 et la plaque 9 propre à venir en appui contre la face 13.

On appréciera que le sous-ensemble selon l'invention peut être réalisé dans une unité de fabrication, le montage final étant réalisé dans une autre unité de fabrication. En outre, le rebord 51 permet de bien positionner les crochets.

En outre grâce à la formation du sous-ensemble selon l'invention, les risques d'erreur sont réduits et le nombre de pièces à stocker est diminué.

En effet, lors du montage final, on ne risque pas de se tromper de languettes ou de crochets contrairement aux dispositions de l'art antérieur.

Bien entendu la présente invention n'est pas limitée à l'exemple de réalisation décrit. En particulier, les organes de fixation 6 peuvent consister en des pions avec une tête 61 et un fût 62 emmanché à force dans les ouvertures 14 des pattes 12.

Pour ce faire le fût 62 peut être doté d'un moletage. Ce molletage étant favorable à la formation du sous-ensemble selon l'invention. Par exemple, à la figure 5 la semelle 52 peut être engagée à force dans le molletage précité.

En variante les pions 6 peuvent être fixés par collage dans les trous 14 comme décrit dans le document US-A-4,854,029. le trou 14 étant alors borgne.

En variante les organes de fixation 6 peuvent consister en des boulons ou en des vis. De même les organes de fixation 25 peuvent consister en des boulons ou en des vis ou par une partie venue par extrusion des plages 29.

Les crochets 5 peuvent avoir la forme de ceux décrits dans le document FR-A-2 031 964.

Les moyens de pivotement 4 peuvent consister en des pattes issues du couvercle par découpe et pliage, lesdites pattes traversant axialement le diaphragme pour être rabattues radialement en direction opposée à l'axe de l'ensemble avec interposition d'une couronne-jonc offrant un appui secondaire comme décrit par exemple dans le document US-A-4,751,991.

Dans ce cas, les pièces 5 figure 5, 72 figures 10 et 9 figure 11 sont montées avec jeu sur les fûts 62 revêtus de colle au niveau des têtes 61. Bien entendu on peut également parfaire le montage des figures 5,10,11 par collage.

En variante les pièces 5,6,7,9 étant métalliques, on peut former temporairement le sous-ensemble 8 à l'aide d'un aimant, que l'on enlève ultérieurement. Ces pièces sont réunies ainsi temporairement par aimantation.

## Revendications

1. Procédé de montage d'un mécanisme d'embrayage, notamment pour véhicule automobile, comportant un couvercle (2) propre à être rapporté sur le plateau de réaction de l'embrayage, un diaphragme (3) monté sur le couvercle par l'intermédiaire de moyens de pivotement (4) assujettisant de manière pivotante le diaphragme (3) au couvercle (2), un plateau de pression (1), lié en rotation au couvercle (2), tout en étant monté mobile axialement par rapport à celui-ci par l'intermédiaire de languettes tangentielles (7), des crochets de rappel (5) pour atteler le diaphragme (3) au plateau de pression (1) par pincement de la périphérie externe du diaphragme (3) entre lesdits crochets (5) et un bossage d'appui (11), que présente le plateau de pression (1), pour appui du diaphragme (3), des organes de fixation (6) servant à la fixation des languettes tangentielles et des crochets de rappel (5) à des pattes (12), que présente le plateau de pression (1) radialement en saillie à sa périphérie externe, caractérisé en ce que l'on forme des sous-ensembles (8) - crochets de rappel (5) - languettes tangentielles (7) - organes de fixation (6), puis en ce que l'on fixe les languettes tangentielles (7) de ces sous-ensembles au couvercle (2), en ce que l'on monte ensuite le diaphragme sur le couvercle à l'aide des moyens de pivotement (4) et enfin en ce que l'on fixe les organes de fixation (6) sur les pattes (12) du plateau de pression (3).

2. Procédé selon la revendication 1, dans lequel les organes de fixation (6) présentent une tête (61) et un fût (62), tandis que les crochets de rappel (5) présentent une semelle (52) pour appui sur les languettes tangentielles (7), caractérisé en ce que les languettes tangentielles (7) sont emprisonnées et pincées axialement entre la tête (61) des organes de fixation (6) et la semelle (52) des crochets (5), et en ce que les organes de fixation (6) traversent par leur fût (62) à jeu des ouvertures (71) pratiquées dans lesdites languettes (7) et sans jeu des ouvertures (55) pratiquées dans la semelle (52) des crochets (5).

3. Procédé selon la revendication 1, dans lequel les organes de fixation présentent une tête (61) et un fût (62), tandis que les crochets de rappel (5) présentent une semelle (52) en appui sur les languettes tangentielles (7), caractérisé en ce que le sous-ensemble (8) est réalisé par l'intermédiaire des organes de fixation (6) présentant pour ce faire une collerette (63) séparant le fût (62) de l'organe de fixation de la tête dudit organe (6), en ce que ladite tête traverse à jeu des ouvertures (71) pratiquées dans les languettes tangentielles (7) et à jeu des ouvertures pratiquées dans la semelle (52) du crochet de rappel (5), et en ce que ladite tête de l'organe de fixation (6) est écrasée en sorte que les languettes (7) et les crochets (5) sont emprisonnés et pincés axialement entre ladite tête sertie (64) et ladite collerette (63).

4. Procédé selon la revendication 1, dans lequel les organes de fixation (6) présentent une tête (61) et un fût (62), tandis que les crochets de rappel (5) présentent une semelle (52) pour appui sur les languettes tangentielles (7), caractérisé en ce que certaines des languettes tangentielles (7) et les semelles (52) des crochets (5) sont emprisonnées et pincées axialement entre ladite tête (61) et la languette tangentielle d'extrémité (72)

5. Procédé selon la revendication 1, dans lequel les organes de fixation (6) présentent une tête (61) et un fût (62), tandis que les crochets de rappel (5) présentent une semelle (52) pour appui sur les languettes tangentielles (7), caractérisé en ce que les languettes tangentielles (7) et les semelles (52) des crochets sont emprisonnées et pincées entre une plaque d'extrémité (9) traversée sans jeu par le fût (62) des organes de fixation (6) et la tête (61) des organes de fixation (6).

6. Procédé selon la revendication 1, caractérisé en ce que ledit sous-ensemble (8) est formé par collage.

7. Procédé selon la revendication 1, caractérisé en ce que ledit sous-ensemble (8) est formé par aimantation temporaire.

## Claims

1. A method for the assembly of a clutch mechanism, especially for a motor vehicle, comprising a cover plate (2) adapted to be attached on the reaction plate of the clutch, a diaphragm (3) mounted on the cover plate by pivot means (4) for applying the diaphragm (3) pivotally against the cover plate (2), a pressure plate (1) coupled to the cover plate (2) for rotation with it while being mounted for axial movement with respect to the latter by means of tangential tongues (7), pressure hooks (5) for applying the diaphragm (3) to the pressure plate (1) by gripping of the outer periphery of the diaphragm (3) between the said hooks (5) and an engagement boss (11) of the pressure plate (1) for engagement with the diaphragm (3), and fastening members (6) for fastening the tangential tongues and the pressure hooks (5) to lugs (12) projecting radially from the pressure plate (1) at its outer periphery, characterised in that sub-assemblies (8) are formed comprising the pressure hooks (5), the tangential tongues (7) and the fastening members (6), in that the tangential tongues (7) of the said sub-assemblies are then secured to the cover plate (2), in that the diaphragm is subsequently fitted on to the cover plate with the aid of the pivot means (4), and in that, finally, the fastening members (6) are secured on the lugs (12) of the pressure plate (3).

2. A method according to Claim 1, in which the fastening members (6) have a head (61) and a shank (62), while the pressure hooks (5) have a foot portion (52) for engagement on the tangential tongues (7), characterised in that the tangential tongues (7) are trapped and gripped axially between the head (61) of the fastening members (6) and the foot portion (52) of the hooks (5), and in that the fastening members (6) extend, by virtue of their shank (62), with a clearance through apertures (71) formed in the said tongues (7), and without clearance through apertures (55) formed in the foot portion (52) of the hooks (5).

3. A method according to Claim 1, in which the fastening members have a head (61) and a shank (62), while the pressure hooks (5) have a foot portion (52) in engagement on the tangential tongues (7), characterised in that the sub-assembly (8) is put together using the fastening members (6), which for this purpose have a collar (63) separating the shank (62) of the fastening member from the head of the said member (6), in that the said head extends with a clearance through apertures (71) formed in the tangential tongues (7), and with a clearance through apertures formed in the foot portion (52) of the pressure hook (5), and in that the said head of the fastening member (6) is upset in such a way that the tongues (7) and the hooks (5) are trapped and gripped axially between the said upset head (64) and the said collar (63).

4. A method according to Claim 1, in which the fastening members (6) have a head (61) and a shank (62), while the pressure hooks (5) have a foot portion (52) for engagement on the tangential tongues (7), characterised in that some of the tangential tongues (7) and the foot portions (52) of the hooks (5) are trapped and gripped axially between the said head (61) and the endmost tangential tongue (72).

5. A method according to Claim 1, in which the fastening members (6) have a head (61) and a shank (62), while the pressure hooks (5) have a foot portion (52) for engagement on the tangential tongues (7), characterised in that the tangential tongues (7) and the foot portions (52) of the hooks are trapped and gripped between an end plate (9), through which the shank (62) of the fastening members (6) and the head (61) of the fastening members (6) extend without clearance.

6. A method according to Claim 1, characterised in that the said sub-assembly (8) is formed by adhesive bonding.

7. A method according to Claim 1, characterised in that the said sub-assembly (8) is formed using temporary magnetic assembly.

## Patentansprüche

1. Verfahren zum Zusammenbau eines Kupplungsmechanismus, insbesondere für Kraftfahrzeuge, umfassend einen Deckel (2), der an der Gegenanpreßplatte der Kupplung angebracht werden kann, eine Tellerfeder (3), die auf dem Deckel anhand von Schwenkmitteln (4) gelagert ist, die die Tellerfeder (3) schwenkbar am Deckel (2) befestigen, eine Druckplatte (1), die drehfest mit dem Deckel (2) verbunden und im Verhältnis zu diesem axial beweglich anhand von tangentialen Zungen (7) gelagert ist, Rückstellhaken (5), um die Tellerfeder (3) an der Druckplatte (1) durch Einklemmung des äußeren Umfangs der Tellerfeder (3) zwischen den besagten Haken (5) und einem Auflagevorsprung (11) anzufügen, den die Druckplatte (1) zur Auflage der Tellerfeder (3) aufweist, Befestigungsorgane (6), die zur Befestigung der tangentialen Zungen und der Rückstellhaken (5) an Ansätzen (12) dienen, die die Druckplatte (1) radial vorstehend an ihrem äußeren Umfang aufweist, **dadurch gekennzeichnet**, daß Untergruppen (8) aus den Rückstellhaken (5), den tangentialen Zungen (7) und den Befestigungsorganen (6) gebildet werden, daß danach die tangentialen Zungen (7) dieser Untergruppen am Deckel (2) befestigt werden, daß anschließend die Tellerfeder am Deckel anhand der Schwenkmittel (4) angebracht wird und daß schließlich die Befestigungsorgane (6) an den Ansätzen (12) der Druckplatte (3) befestigt werden.

2. Verfahren nach Anspruch 1, wobei die Befestigungsorgane (6) einen Kopf (61) und einen Schaft (62) aufweisen, während die Rückstellhaken (5) ein Fußstück (52) für die Auflage auf den tangentialen Zungen (7) aufweisen, **dadurch gekennzeichnet**, daß die tangentialen Zungen (7) axial zwischen dem Kopf (61) der Befestigungsorgane (6) und dem Fußstück (52) der Haken (5) eingeschlossen und eingeklemmt sind und daß die Befestigungsorgane (6) mit ihrem Schaft (62) mit Spiel durch Öffnungen (71), die in die besagten Zungen (7) eingearbeitet sind, und spielfrei durch Öffnungen (55) hindurchgehen, die in das Fußstück (52) der Haken (5) eingearbeitet sind.

3. Verfahren nach Anspruch 1, wobei die Befestigungsorgane (6) einen Kopf (61) und einen Schaft (62) aufweisen, während die Rückstellhaken (5) ein Fußstück (52) in Auflage auf den tangentialen Zungen (7) aufweisen, **dadurch gekennzeichnet**, daß die Untergruppe (8) mittels der Befestigungsorgane (6) ausgeführt ist, die dazu einen Kragen (63) aufweisen, der den Schaft (62) des Befestigungsorgans vom Kopf des besagten Organs (6) trennt, daß der besagte Kopf mit Spiel durch Öffnungen (71), die in die tangentialen Zungen (7) eingearbeitet sind, und mit Spiel durch Öffnungen hindurchgeht, die in das Fußstück (52) des Rückstellhakens (5) eingearbeitet sind, und daß der besagte Kopf des Befestigungsorgans (6) gestaucht wird, so daß die Zungen (7) und die Haken (5) axial zwischen dem besagten aufgepreßten Kopf (64) und dem besagten Kragen (63) eingeschlossen und eingespannt sind.

4. Verfahren nach Anspruch 1, wobei die Befestigungsorgane (6) einen Kopf (61) und einen Schaft (62) aufweisen, während die Rückstellhaken (5) ein Fußstück (52) für die Auflage auf den tangentialen Zungen (7) aufweisen, **dadurch gekennzeichnet**, daß bestimmte der tangentialen Zungen (7) und die Fußstücke (52) der Haken (5) axial zwischen dem besagten Kopf (61) und der tangentialen Abschlußzunge (72) eingeschlossen und eingeklemmt sind.

5. Verfahren nach Anspruch 1, wobei die Befestigungsorgane (6) einen Kopf (61) und einen Schaft (62) aufweisen, während die Rückstellhaken (5) ein Fußstück (52) für die Auflage auf den tangentialen Zungen (7) aufweisen, **dadurch gekennzeichnet**, daß die tangentialen Zungen (7) und die Fußstücke (52) der Haken zwischen einer Abschlußplatte (9), durch die der Schaft (62) der Befestigungsorgane (6) spielfrei hindurchgeht, und dem Kopf (61) der Befestigungsorgane (6) eingeschlossen und eingeklemmt sind.

6. Verfahren nach Anspruch 1 , **dadurch gekennzeichnet**, daß die besagte Untergruppe (8) durch Verklebung gebildet wird.

7. Verfahren nach Anspruch 1 , **dadurch gekennzeichnet**, daß die besagte Untergruppe (8) durch vorübergehende Magnetisierung gebildet wird.
